# FASCICULE DE BREVET EUROPEEN

(11) **EP 0 444 970 B1**
(45) Date de publication et mention de la délivrance du brevet: **29.09.1993**
(21) Numéro de dépôt: 91400082.3
(22) Date de dépôt: 16.01.1991
(51) Int. Cl.: F16C 1/26, F02M 1/02

(54) **Agencement anti-vibratoire de la commande du volet de démarrage à froid d'un véhicule automobile**
Antivibriereinrichtung für die Starterklappenbetätigung eines Kraftfahrzeuges
Anti-vibratory arrangement for the choke actuator of a vehicle

(30) Priorité: 28.02.1990 FR 9002479
(43) Date de publication de la demande: 04.09.1991
(73) Titulaire: AUTOMOBILES PEUGEOT, 75116 Paris (FR); AUTOMOBILES CITROEN, 92200 Neuilly-sur-Seine (FR)
(72) Inventeur: Roy, Patrick, F-25200 Montbéliard (FR); Richard, Maurice, F-25550 Dung (FR)
(74) Mandataire: Seytre, Françoise

(56) Documents cités:
- EP-A- 0 042 721
- DE-A- 3 247 115
- FR-A- 1 432 054
- FR-A- 2 591 663
- GB-A- 186 716
- GB-A- 2 060 808
- US-A- 3 528 312
- US-A- 3 546 962
- US-A- 4 625 826
- US-A- 4 773 278

## Description

L'invention concerne un agencement de la commande du volet de démarrage à froid d'un véhicule automobile destiné à empêcher la transmission vers l'intérieur dudit véhicule des vibrations engendrées par le fonctionnement normal du moteur.

Les dispositifs de commande manuelle du volet de démarrage à froid pour véhicule automobile, avec moteur à carburation, sont en général composés d'un câble de transmission monté sous gaine et relié d'une part au volet et, d'autre part à une palette placée dans la planche de bord (ou au voisinage de celle-ci). Ce câble, métallique, chemine donc, à travers le tablier de séparation, du compartiment moteur à l'habitacle, transmettant ainsi, dans ce dernier les vibrations du moteur sous forme de bruits parasites gênants.

On a proposé divers dispositifs pour palier cet inconvénient. Certains agissent sur la gaine, par exemple en coupant le câble et en liant ensuite les deux tronçons par un manchon en caoutchouc. Ce dispositif est toujours trop encombrant pour être agencé, à travers le tablier, dans le compartiment moteur, il doit être installé du coté habitacle, donc trop loin de la source de vibrations pour être réellement efficace. D'autres dispositifs agissent sur le câble métallique, par exemple en interposant entre le câble et le tourillon du secteur de commande du volet un élément filtrant en élastomère. Or le câble métallique est également utilisé comme conducteur électrique pour l'alimentation de la lampe témoin de position du volet de démarrage à froid, de sorte que cette disposition, en détruisant la continuité électrique oblige à modifier le circuit de ladite lampe témoin.

On connaît, également, par le brevet US-A-3 528 312, un dispositif pour la commande d'un volet de démarrage à froid, comprenant un câble métallique contenu dans une gaine isolante fixée sur un support au moyen d'une attache formée de deux pattes circulaires non jointives.

La présente invention propose un agencement de la commande de volet de démarrage à froid qui ne présente pas les inconvénients de l'art antérieur et qui permet un filtrage mécanique exhaustif des vibrations engendrées par le moteur.

A cet effet, le dispositif de commande est du type comprenant un câble métallique contenu dans une gaine isolante fixée sur un support au moyen d'une attache formée de deux enroulements circulaires non jointifs ledit câble étant lié d'une part au secteur de commande dudit volet et d'autre part à une palette de manoeuvre placée dans l'habitacle du véhicule. Il est caractérisé en ce que, entre la gaine et l'attache filtrante, est interposé un manchon en matériau isolant des vibrations, serré autour de la gaine et pourvu d'un perçage cylindrique axial comportant une partie dont le diamètre est supérieur au diamètre externe de la gaine, ladite partie s'étendant, en direction radiale, en vis-à-vis de l'emplacement recevant les enroulements de l'attache.

Selon d'autres caractéristiques de l'invention :
- Les enroulements de l'attache filtrante sont contenus dans une gorge pratiquée dans le manchon.
- La longueur axiale de la partie du manchon de diamètre agrandi est au moins égale à la largeur de la gorge en vis-à-vis de laquelle elle s'étend.
   l'attache filtrante est constituée d'un fil dont l'enroulement forme deux spires médianes, non jointives disposées autour du manchon.
- Chacune des extrémités de l'attache forme une boucle juxtaposée à l'autre pour entourer une vis solidaire du support.
- Chacune des boucles comporte un bout recourbé, respectivement placé au montage, en appui contre le support.
- Selon un second mode de réalisation de l'invention, l'attache filtrante constituée d'un lien dont les enroulements sont composés de deux bandes médianes formées par une fente longitudinale séparant ledit lien en deux parties non jointives.
- L'une des extrémités du câble métallique est façonnée en forme de ressort hélicoïdal dont le bout libre est enroulé autour d'un pion solidaire du secteur de commande du volet de démarrage à froid.

D'autres caractéristiques et avantages de l'invention apparaîtront à la lecture de la description qui va suivre d'un mode de réalisation, donné à titre d'exemple non limitatif, en se référant aux dessins annexés dans lesquels :
- La figure 1 est une vue du dispositif de commande selon l'invention.
- La figure 2 est une vue en coupe longitudinale partielle du manchon isolant.
- La figure 3 est une vue de dessus du manchon et de son dispositif d'accrochage sur le carburateur.
- La figure 4 est une vue d'un premier mode de réalisation de l'attache filtrante et de son support.
- La figure 5 est une vue d'un second mode de réalisation de l'attache filtrante.

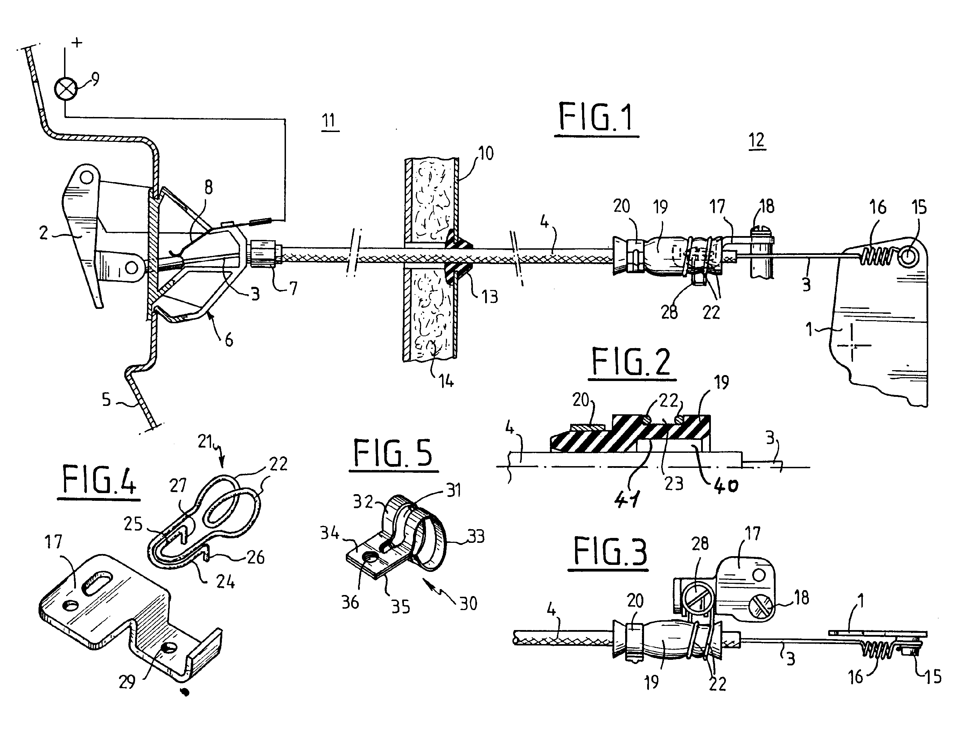

Sur la figure 1 on a représenté un dispositif de commande du volet de démarrage à froid selon l'invention. Ce dispositif assure une liaison mécanique entre un secteur de commande 1 dudit volet et une palette 2, au moyen d'un câble 3 métallique lequel est, sauf à ses extrémités reliées aux organes précités, contenu dans une gaine 4 isolante. La palette 2 est montée sur la planche de bord 5 au moyen d'un boîtier 6 auquel vient se raccorder le connecteur 7 de la gaine 4. Un contact électrique 8 vient coopérer avec l'extrémité dénudée du câble 3 pour commander par exemple, une lampe témoin 9 de mise en service du démarrage à froid, celle-ci étant reliée à la masse par l'intermédiaire dudit câble 3.

L'ensemble formé par la gaine isolante 4 et le câble de commande traverse le tablier 10, séparant l'habitacle 11 du compartiment moteur 12, par l'intermédiaire d'un oeillet étanche 13. Ledit tablier est ordinairement revêtu, coté habitacle, d'un complexe insonorisant 14.

Du coté carburateur, le secteur de commande 1 est pourvu d'un pion 15 autour duquel est enroulée l'extrémité 16 du câble 3 façonnée en forme de ressort hélicoïdal de façon à assurer une fonction de filtrage mécanique des vibrations.

Le câble 3 et sa gaine 4 sont tenus par un support 17 fixé sur le carburateur (non représenté) au moyen d'une vis 18 . Pour assurer cet accrochage, la gaine 4 est entourée par un manchon 19 dont la fixation est assurée par serrage (par exemple au moyen d'un collier 20 à agrafage rapide). Le manchon 19 est réalisé en un matériau insonorisant, par exemple en élastomère, et il est tenu sur le support 17 au moyen d'une attache 21 spécialement conçue pour filtrer les vibrations.

Une première configuration de cette attache est visible sur les figures 1 à 4 . On voit qu'elle est formée d'un fil du type corde à piano, par exemple, dont la partie médiane est enroulée sous forme de spires 22 non jointives. Ceci permet de limiter la surface commune entre l'attache (liée mécaniquement au moteur) et le manchon 19 (lié au câble), celle-ci étant réduite aux spires de faible épaisseur et, de surcroît, espacées l'une de l'autre. Les spires 22 sont placées au montage dans une gorge 23 formée dans la paroi externe du manchon 19 (figure 2). Le perçage cylindrique axial du manchon comporte une partie 40 dont le diamètre est supérieur au diamètre externe de la gaine 4. Cette partie 40 s'étend, si l'on regarde en direction radiale, en vis-à-vis de l'emplacement de la paroi externe du manchon sur laquelle sont reçues les spires 22, sa longueur axiale est au moins égale à la largeur de la gorge 23 dans laquelle sont logées ces spires. De la sorte, la paroi interne 41 de la partie du manchon 19 qui supporte l'attache n'est pas au contact direct de la paroi externe de la gaine 4.

Chacune des extrémités du fil de l'attache 21 forme une boucle 24, 25 en demi-cercle, juxtaposée à l'autre et terminée, respectivement, par un bout 26, 27, recourbé pour venir en appui sur le support 17, tandis que les boucles 24, 25 sont disposées autour d'une vis 28 montée dans un trou 29 du support 17, pour retenir l'attache 21 et par conséquent l'ensemble formé par le manchon 19, la gaine 4 et le câble 3. La courbure des bouts 26 et 27 permet d'éloigner l'attache 21 du support 17 et, ce faisant, de parfaire encore l'isolation dudit ensemble.

Sur la figure 5 on a représenté une variante de réalisation de l'attache filtrante, celle-ci est constituée d'un lien en tôle mince 30 protégée contre l'oxydation, plié en deux et dont la partie médiane est pourvue d'une fente longitudinale 31 séparant le lien en deux bandes étroites 32, 33 non jointives destinées à enserrer le manchon 19. Les extrémités 34 et 35 du lien 30 sont appliquées l'une contre l'autre et maintenues en place par l'action de la vis 28 de liaison avec le support 17, introduite dans le trou 36 percé dans les dites extrémités 34, 35.

## Revendications

1. Agencement anti-vibratoire pour la commande du volet de démarrage à froid du moteur d'un véhicule automobile comprenant un câble métallique (3) contenu dans une gaine isolante (4) fixée sur un support (17) au moyen d'une attache (21),(30) formée de deux enroulements circulaires non jointifs (22),(32,33), ledit câble étant lié d'une part au secteur de commande (1) dudit volet et d'autre part à une palette de manoeuvre (2) placée dans l'habitacle (11) du véhicule,
caractérisé en ce que, entre la gaine (4) et l'attache filtrante (21),(30) est interposé un manchon (19) en matériau isolant des vibrations, serré autour de la gaine (4) et pourvu d'un perçage cylindrique axial comportant une partie (40) dont le diamètre est supérieur au diamètre externe de la gaine (4), ladite partie (40) s'étendant, en direction radiale, en vis-à-vis de l'emplacement recevant les enroulements (21),(32,33) de l'attache.

2. Agencement selon la revendication 1,
caractérisé en ce que les enroulements (21),(32,33) de l'attache filtrante (21),(30) sont contenus dans une gorge (23) pratiquée dans le manchon (19).

3. Agencement selon la revendication 2,
caractérisé en ce que la longueur axiale de la partie (40) est au moins égale à la largeur de la gorge (23) en vis-à-vis de laquelle elle s'étend.

4. Agencement selon l'une des revendications précédentes, caractérisé en ce que l'attache filtrante (21) est constituée d'un fil dont l'enroulement forme deux spires (22), médianes, non jointives disposées autour du manchon (19).

5. Agencement selon la revendication 4,
caractérisé en ce que chacune des extrémités de l'attache (21) forme une boucle (24), (25) juxtaposée à l'autre pour entourer une vis (28) solidaire du support (17).

6. Agencement selon la revendication 5,
caractérisé en ce que chacune des boucles (24), (25) comporte un bout recourbé, respectivement (26), (27) placé au montage, en appui contre le support (17).

7. Agencement selon l'une des revendications 1 à 3,
caractérisé en ce que l'attache filtrante est constituée d'un lien (30) dont les enroulements sont composés de deux bandes médianes (32), (33) formées par une fente longitudinale (31) séparant ledit lien en deux parties non jointives.

8. Agencement selon l'une des revendications précédentes,
caractérisé en ce que le manchon (19) est maintenu sur la gaine (4) au moyen d'un collier (20).

9. Agencement selon l'une des revendications précédentes,
caractérisé en ce que l'une des extrémités du câble métallique (3) est façonnée en forme de ressort hélicoïdal (16) dont le bout libre est enroulé autour d'un pion (15) solidaire du secteur de commande (1) du volet de démarrage a froid.

## Patentansprüche

1. Antivibriereinrichtung für die Starterklappensteuerung eines Kraftfahrzeugmotors, mit einem metallischen Kabel (3), das in einer isolierenden Hülle (4) enthalten ist, die auf einem Träger (17) mit Hilfe einer Befestigung (21), (30) befestigt ist, die aus zwei kreisförmigen nicht aneinanderstoßenden Wicklungen (22), (32,33) gebildet wird, wobei das Kabel einerseits mit dem Steuerungsabschnitt (1) der Klappe und andererseits mit einem Handhabungshebel (2) verbunden ist, der im Innenraum (11) des Fahrzeugs angeordnet ist,
dadurch gekennzeichnet, daß zwischen der Hülle (4) und der filtrierenden Befestigung (21), (30) eine Muffe (19) aus vibrationsisolierendem Material gesetzt ist, die um die Hülle (4) geklemmt ist und mit einem zylindrischen axialen Durchbruch versehen ist, der einen Bereich (40) aufweist, dessen Durchmesser größer ist als der äußere Durchmesser der Hülle (4), wobei der Bereich (40) sich in radialer Richtung gegenüber dem Ort erstreckt, der die Wicklungen (21), (32,33) der Befestigung aufnimmt.

2. Einrichtung nach Anspruch 1, dadurch gekennzeichnet, daß die Wicklungen (21), (32,33) der filtrierenden Befestigung (21), (30) in einer Kerbe (23) enthalten sind, die in der Muffe (19) ausgebildet ist.

3. Einrichtung nach Anspruch 2, dadurch gekennzeichnet, daß die axiale Länge des Bereichs (40) wenigstens gleich der Breite der Kerbe (23) ist, gegenüber derer er sich erstreckt.

4. Einrichtung nach einem der vorhergehenden Ansprüche, dadurch gekennzeichnet, daß die filtrierende Befestigung (21) gebildet wird aus einem Faden bzw. Draht, dessen Wicklung zwei mittlere nicht aneinanderliegende Schleifen (22) bildet, die um die Muffe (19) herum angeordnet sind.

5. Einrichtung nach Anspruch 4, dadurch gekennzeichnet, daß ein jedes Ende der Befestigung (21) eine Schlinge (24), (25) bildet, die aneinanderliegend angeordnet sind, um eine mit dem Träger (17) verbundene Schraube (28) zu umgeben.

6. Einrichtung nach Anspruch 5, dadurch gekennzeichnet, daß eine jede der Schlingen (24), (25) ein entsprechend umgebogenes Ende (26) bzw. (27) aufweist, das im montierten Zustand in Anlage gegen den Träger (17) ist.

7. Einrichtung nach einem der Ansprüche 1 bis 3, dadurch gekennzeichnet, daß die filtrierende Befestigung gebildet wird aus einer Verbindung (30), deren Wicklungen aus zwei Mittenbändern (32), (33) gebildet sind, die durch eine Längskerbe (31) gebildet werden, die die Verbindung in zwei nicht aneinanderliegende Bereiche trennt.

8. Einrichtung nach einem der vorhergehenden Ansprüche, dadurch gekennzeichnet, daß die Muffe (19) auf der Hülle (4) mittels eines Ringes (20) gehalten wird.

9. Einrichtung nach einem der vorhergehenden Ansprüche, dadurch gekennzeichnet, daß eines der Enden des metallischen Kabels (3) in Form einer Schraubenfeder (16) ausgebildet ist, dessen freies Ende um einen Zapfen (15) gewickelt ist, der mit dem Steuerabschnitt (1) der Starterklappe verbunden ist.

## Claims

1. An anti-vibratory arrangement for the control of the cold-starting shutter of the engine of a motor vehicle comprising a metal cable (3) contained in an insulating sheath (4) fixed on a support (17) by means of a fastening (21), (30) formed of two non-contiguous circular windings (22), (32,33), said cable being connected on the one hand to the control sector (1) of said shutter and on the other hand to an actuating plate (2) placed in the cabin (11) of the vehicle,
characterised in that, between the sheath (4) and the filtering fastening (21), (30) there is interposed a sleeve (19) of a material which insulates vibrations, applied tightly around the sheath (4) and provided with an axial cylindrical bore comprising a part (40), the diameter of which is greater than the external diameter of the sheath (4), said part (40) extending, in radial direction, opposite the site receiving the windings (21), (32,33) of the fastening.

2. An arrangement according to Claim 1,
characterised in that the windings (21), (32,33) of the filtering fastening (21), (30) are contained in a groove (23) arranged in the sleeve (19).

3. An arrangement according to Claim 2,
characterised in that the axial length of the part (40) is at least equal to the width of the groove (23) opposite which it extends.

4. An arrangement according to one of the preceding claims, characterised in that the filtering fastening (21) is constituted of a wire, the winding of which forms two median, non-contiguous turns (22) arranged around the sleeve (19).

5. An arrangement according to Claim 4,
characterised in that each of the ends of the fastening (21) forms a loop (24), (25) juxtaposed with respect to the other to surround a screw (28) fixed to the support (17).

6. An arrangement according to Claim 5,
characterised in that each of the loops (24), (25) comprises a bent-back end, respectively (26), (27) placed on assembly, resting against the support (17).

7. An arrangement according to one of Claims 1 to 3,
characterised in that the filtering fastening is constituted by a link (30), the windings of which are composed of two median bands (32), (33) formed by a longitudinal slot (31) separating said link into two non-contiguous parts.

8. An arrangement according to one of the preceding claims,
characterised in that the sleeve (19) is held on the sheath (4) by means of a collar (20).

9. An arrangement according to one of the preceding claims,
characterised in that one of the ends of the metal cable (3) is shaped in the form of a helicoidal spring (16), the free end of which is wound around a pin (15) integral with the control sector (1) of the cold-starting shutter.
